# EUROPÄISCHE PATENTSCHRIFT

(11) **EP 1 340 280 B1**
(45) Veröffentlichungstag und Bekanntmachung des Hinweises auf die Patenterteilung: **19.01.2005**
(21) Anmeldenummer: 01999979.6
(22) Anmeldetag: 27.11.2001
(51) Int. Cl.: H01M 8/04, G01M 3/16

(54) **VERFAHREN ZUM ERKENNEN EINER UNDICHTIGKEIT IN EINER BRENNSTOFFZELLE**
METHOD FOR RECOGNITION OF A LEAK IN A FUEL CELL
PROCEDE POUR RECONNAITRE UN DEFAUT D'ETANCHEITE DANS UNE PILE A COMBUSTIBLE

(30) Priorität: 06.12.2000 DE 10060626
(43) Veröffentlichungstag der Anmeldung: 03.09.2003
(73) Patentinhaber: SIEMENS AKTIENGESELLSCHAFT, 80333 München (DE)
(72) Erfinder: MATTEJAT, Arno, 91088 Bubenreuth (DE); VOITLEIN, Ottmar, 91475 Lonnerstadt (DE)
(86) Internationale Anmeldenummer: PCT/DE2001/004453
(87) Internationale Veröffentlichungsnummer: WO 2002/047189

(56) Entgegenhaltungen:
- DE-C- 19 649 434
- US-A- 6 156 447
- PATENT ABSTRACTS OF JAPAN vol. 1996, no. 11, 29. November 1996 (1996-11-29) & JP 08 185879 A (FUJI ELECTRIC CO LTD), 16. Juli 1996 (1996-07-16)

## Beschreibung

Die Erfindung betrifft ein Verfahren zum Erkennen einer internen Undichtigkeit in einer Brennstoffzelle.

In einer Brennstoffzelle werden durch die Zusammenführung von Wasserstoff (H₂) und Sauerstoff (O₂) in einer elektrochemischen Reaktion elektrische Energie und Wärme erzeugt. Hierfür wird der Brennstoffzelle Wasserstoff und Sauerstoff entweder in ihrer reinen Form oder als wasserstoffhaltiges erstes Betriebsgas und als sauerstoffhaltiges zweites Betriebsgas zugeführt. Während des Betriebs der Brennstoffzelle wird das wasserstoffhaltige erste Betriebsgas in den Anodengasraum der Brennstoffzelle geleitet wobei der Wasserstoff die poröse Anode der Brennstoffzelle durchdringt und somit zum Elektrolyten der Brennstoffzelle gelangt. In gleicher Weise wird das sauerstoffhaltige zweite Betriebsgas in den Kathodengasraum der Brennstoffzelle geleitet, der Sauerstoff durchdringt die poröse Kathode der Brennstoffzelle und gelangt ebenfalls zum Elektrolyten der Brennstoffzelle. Je nach Bauart des Elektrolyten dringen entweder Wasserstoff- oder Sauerstoffionen durch den Elektrolyten hindurch, so dass sich auf einer Seite des Elektrolyten Sauerstoff und Wasserstoff in einer elektrochemischen Reaktion zu Wasser (H₂O) verbinden und elektrische Energie sowie Wärme frei werden.

Die Anode, der Elektrolyt und die Kathode der Brennstoffzelle bilden eine Membran, die gleich einer Wand den Anodengasraum vom Kathodengasraum der Brennstoffzelle trennt. Weist diese Membran eine Undichtigkeit, beispielsweise in Form eines Loches auf, so strömt während des Betriebs der Brennstoffzelle unkontrolliert beispielsweise Sauerstoff in den Wasserstoff enthaltenden Anodengasraum. Dies führt zu einer unkontrollierten Reaktion von Wasserstoff und Sauerstoff im Anodengasraum, bei der sich gegebenenfalls so viel Wärme bildet, dass die Brennstoffzelle zerstört wird. Bei der Herstellung der Brennstoffzelle ist daher unbedingt darauf zu achten, dass die membranartige Wand zwischen dem Anodengasraum und dem Kathodengasraum keine Undichtigkeit aufweist.

Um Undichtigkeiten in der Membran von Brennstoffzellen zu entdecken werden die Brennstoffzellen vor ihrer Auslieferung einem Lecktest unterworfen. Hierbei ist es effizient, eine Vielzahl von Brennstoffzellen zu einem Brennstoffzellenmodul zusammenzufügen und gemeinsam zu testen. Das Brennstoffzellenmodul umfasst den die Zellen enthaltenden Brennstoffzellenblock sowie Versorgungseinheiten und vor allem Sicherheitseinrichtungen, die gewährleisten, dass im Falle einer unkontrollierten Reaktion von Wasserstoff und Sauerstoff in einer Brennstoffzelle der Brennstoffzellenblock abgeschaltet wird, um eine Zerstörung des Moduls zu verhindern.

Wird eine Undichtigkeit in einer Zelle eines Moduls erkannt, so muss der Brennstoffzellenblock, der die Brennstoffzelle enthält aus dem Modul ausgebaut und zerlegt werden, damit die schadhafte Zelle entfernt oder ausgetauscht werden kann. Dieses Verfahren ist sehr aufwendig, da das bereits fertig montierte Modul wieder auseinandergebaut werden muss. Die wesentlich weniger aufwendige Variante, das Lecktestverfahren am "nackten" Brennstoffzellenblock ohne Sicherheitseinrichtungen durchzuführen, ist sehr riskant, da im Falle einer Undichtigkeit eine unkontrollierte Reaktion in einer Brennstoffzelle nicht erkannt und unterbunden wird. Dies kann zu einer weiträumigen Zerstörung innerhalb des Brennstoffzellenmoduls führen.

Es ist die Aufgabe der vorliegenden Erfindung, ein Verfahren zum Erkennen einer internen Undichtigkeit in einer Brennstoffzelle anzugeben, das ohne Risiko der Zerstörung der Brennstoffzelle auch an einer Brennstoffzelle durchgeführt werden kann, die nicht mit einer Sicherheitseinrichtung zum Überwachen auf eine unkontrollierte Reaktion verbunden ist.

Diese Aufgabe wird durch ein Verfahren zum Erkennen einer internen Undichtigkeit in einer Brennstoffzelle gelöst, bei dem erfindungsgemäß der Anodengasraum der Brennstoffzelle mit einem ersten Testgas und der Kathodengasraum der Brennstoffzelle mit einem zweiten Testgas beaufschlagt und die Zellspannung der Brennstoffzelle gemessen und der zeitliche Verlauf der Zellspannung überwacht wird, wobei als erstes Testgas ein Gas mit einem Wasserstoffgehalt von 0,1 bis 15 Vol.-% und als zweites Testgas ein Gas mit einem Sauerstoffgehalt von 0,1 bis 30 Vol.-% gewählt wird.

Die beiden zu dem Elektrolyten gelangenden Testgase bewirken eine Zellspannung, die bei Fehlen einer elektrischen Last an der Brennstoffzelle den Maximalwert erreicht, den die Brennstoffzelle erreichen kann. Bei Vorliegen einer Undichtigkeit in der Membran dringt eines der Testgase, beispielsweise das wasserstoffhaltige erste Testgas in den Kathodengasraum der undichten Brennstoffzelle. Dort führt die Verbindung von Wasserstoff und Sauerstoff nicht nur zu einer unkontrollierten und Wärme erzeugenden Reaktion, das erste Testgas verdrängt auch das sauerstoffhaltige Testgas von der Kathode. Da immer weniger Sauerstoff zum Elektrolyten vordringen kann findet am Elektrolyten eine immer geringere elektrochemische Reaktion statt, wodurch die Zellspannung in der schadhaften Zelle absinkt. Das Absinken einer Zellspannung ist ein Indiz für eine Undichtigkeit in der Membran der Brennstoffzelle. Mit Hilfe der Messung der Zellspannungen der Zellen eines Moduls und der Überwachung der Zellspannung auf ihren zeitlichen Verlauf hin kann somit eine Undichtigkeit in der Membran einer Zelle durch das Absinken der Zellspannung erkannt werden.

Es ist bei einem Lecktest-Verfahren für eine Brennstoffzelle darauf zu achten, dass in keinen der Gasräume ein'zündfähiges Gasgemisch entsteht. Ein zündfähiges Gasgemisch entsteht beispielsweise, wenn mehr als 5% Wasserstoff bei Raumtemperatur in Luft eingebracht wird. Sinkt der Wasserstoffgehalt in einem luftartigen Gasgemisch unter 5%, so ist das Risiko einer spontanen Zündung bei einer Temperatur von Raumtemperatur bis etwa 100 °C gering. Es ist also bei einem Lecktestverfahren für eine Brennstoffzelle ohne Sicherheitseinrichtung darauf zu achten, dass nur geringe Mengen an Wasserstoff in ein sauerstoffreicheres Gas oder geringe Mengen an Sauerstoff in ein wasserstoffreicheres Gas gelangen können. Strömt beispielsweise ein erstes Testgas aus 15% Wasserstoff und 85% Stickstoff in den Kathodengasraum zu einem sauerstoffreicheren zweiten Testgas - beispielsweise Luft, so verdünnt sich dort der Wasserstoffgehalt auf einen Prozentsatz, der von der Größe des Lecks abhängig ist. Es hat sich in Versuchen herausgestellt, dass sich bei Verwendung eines ersten Betriebsgases mit unter 20% Wasserstoff und eines zweiten Betriebsgases mit unter 30% Sauerstoff unter Normalbedingungen kein zündfähiges Gemisch im Anoden- oder Kathodengasraum der Brennstoffzelle ausbildet. Eine gegenüber Normalbedingungen stark erhöhte Sicherheit gegen eine zerstörende Wärmebildung in der Brennstoffzelle wird durch die Verwendung eines ersten Betriebsgases mit unter 15% Wasserstoff und eines zweiten Betriebsgases mit unter 25% Sauerstoff erreicht.

Bei einem Leck in der Membran reagieren zwar der Wasserstoff und der Sauerstoff in einer unkontrollierten und Wärme erzeugenden Reaktion zu Wasser, diese Reaktion läuft jedoch so langsam ab, dass die dabei auftretende Wärme aus der Brennstoffzelle ohne Schaden für die Brennstoffzelle abgeführt werden kann. Hierdurch ist gewährleistet, dass die Brennstoffzelle auf eine Undichtigkeit ihrer Membran hin ohne Risiko der Zerstörung der Brennstoffzelle getestet werden kann.

In einer vorteilhaften Ausgestaltung der Erfindung ergibt der Wasserstoffgehalt des ersten Testgases addiert mit dem Sauerstoffgehalt des zweiten Testgases nicht mehr als 35 Vol.-%. Wird also beispielsweise als zweites Testgas Luft mit einem Sauerstoffgehalt von 21 Vol.-% verwendet, so beträgt der Volumenanteil des Wasserstoffs im ersten Testgas nicht mehr als 14 Vol.-%. Wird in einem zweiten Beispiel ein erstes Testgas mit einem Wasserstoffgehalt von 20 Vol.-% verwendet, so beträgt der Volumenanteil des Sauerstoffs im zweiten Testgas nicht'mehr als 15%. Mit diesen Testgasen ist sichergestellt, dass sich auch bei Unregelmäßigkeiten in den Testbedingungen wie beispielsweise einer besonders großen Undichtigkeit in einer Membran einer Brennstoffzelle oder Temperaturen der Brennstoffzelle von um oder leicht über 100°C kein zündfähiges Gasgemisch in der Brennstoffzelle bildet.

Zweckmäßigerweise wird die Brennstoffzelle während der Messung der Zellspannung kontinuierlich mit den Testgasen gespült. Es wird also dafür gesorgt, dass das erste, wasserstoffhaltige Testgas den Anodengasraum kontinuierlich durchströmt oder das zweite, sauerstoffhaltige Testgas den Kathodengasraum kontinuierlich durchströmt. Bei einem Leck in der Membran der Brennstoffzelle strömt eines der Testgase aus einem Gasraum in den anderen Gasraum der Brennstoffzelle über und blockiert den Zugang des anderen Testgases zu der Region um die undichte Stelle in der Membran herum. Bedingt dadurch sinkt die Zellspannung der Brennstoffzelle ab oder erreicht nicht den Wert, den gleichartige Brennstoffzellen ohne die Undichtigkeit erreichen. Da die Gasräume der Brennstoffzelle kontinuierlich mit den ihnen zugehörigen Testgasen durchspült werden, endet das Überströmen eines Testgases von einem Gasraum in den anderen nicht. Hierdurch ist gewährleistet, dass die Zellspannung einer Brennstoffzelle, die eine Undichtigkeit in der Membran aufweist, so lange wie die Gasräume mit Testgasen durchspült werden nicht auf den üblichen Zellspannungswert ansteigt. Das Indiz für eine Undichtigkeit in der Membran, nämlich die dauerhaft niedrige Zellspannung der Brennstoffzelle, bleibt somit über einen längeren Zeitraum erhalten. Hierdurch wird erreicht, dass eventuell auftretende "Dreck-Effekte", die zu einem vorübergehenden Absinken der Zellspannung einer Brennstoffzelle führen, eindeutig unterschieden werden können von einem durch eine Undichtigkeit in der Membran bedingten Absinken der Zellspannung einer Brennstoffzelle.

In einer alternativen Ausgestaltung der Erfindung wird erst ein Gasraum der Brennstoffzelle mit einem der Testgase beaufschlagt und dann der andere Gasraum mit dem anderen Testgas beaufschlagt, wobei während der Messung der Zellspannung das letztere Testgas in der Brennstoffzelle nicht erneuert wird. Vorteilhafterweise wird der letztere Gasraum vor der Beaufschlagung mit dem anderen Testgas evakuiert. Bei einer fehlerhaften Brennstoffzelle, deren Membran eine Undichtigkeit aufweist, strömt das eine Testgas, beispielsweise das wasserstoffhaltige erste Testgas vom Anodengasraum in den - eventuell evakuierten - Kathodengasraum über. Es liegt somit an der Anode sowie an der Kathode wasserstoffhaltiges erstes Testgas an, wodurch sich keine Zellspannung ausbilden kann. Beim Einströmen des zweiten Testgases in den Kathodengasraum ist die Kathode der Brennstoffzelle vollständig mit wasserstoffhaltigem ersten Testgas belegt. Da das zweite Testgas nicht zur Kathode der Brennstoffzelle vordringen kann, kann sich auch zu diesem Zeitpunkt noch keine Zellspannung ausbilden. Die Brennstoffzelle zeigt erst dann eine Zellspannung, wenn Teile des ersten Testgases im Kathodengasraum in einer Wärme erzeugenden Reaktion vom Sauerstoff des zweiten Testgases aufgebraucht worden sind. Erst wenn Sauerstoff aus dem zweiten Testgas die Kathode der Brennstoffzelle erreichen kann, baut sich eine Zellspannung auf. Da jedoch durch das kontinuierliche Spülen des Anodengasraums mit erstem Testgas dieses erste Testgas fortwährend durch die Undichtigkeit in der Membran in den Kathodengasraum gedrückt wird, wird der Sauerstoff aus dem zweiten Testgas nach einer Weile verbraucht sein. Zu diesem Zeitpunkt wird die Zellspannung der Brennstoffzelle vollständig auf Null zurückgegangen sein. Eine fehlerhafte Brennstoffzelle zeichnet sich somit durch eine zuerst nur leicht ansteigende und dann zusammenbrechende Zellspannung aus und ist daher als fehlerhaft identifizierbar.

In einer weiteren vorteilhaften Ausgestaltung der Erfindung wird während der Messung der Zellspannung einer der Gasräume mit einem größeren Gasdruck mit Testgas beaufschlagt als der andere Gasraum. Hierdurch wird erreicht, dass das mit dem größeren Gasdruck eingebrachte Testgas bei einer Undichtigkeit in der Membran auf jeden Fall durch die Undichtigkeit in der Membran in den anderen Gasraum einströmt und somit ein Absinken der Zellspannung bewirkt.

Zweckmäßigerweise wird mindestens einer der Gasräume vor der Messung der Zellspannung entwässert. In der Brennstoffzelle sammelt sich unter Umständen während des Testverfahrens Produktwasser aus der elektrochemischen Reaktion an. Wird die Brennstoffzelle zusätzlich mit befeuchteten Testgasen beaufschlagt, so sammelt sich in der Brennstoffzelle gegebenenfalls auch auskondensiertes Befeuchtungswasser an. Dieses Wasser belegt auch die Membran teilweise, so dass die Zellspannung der Brennstoffzelle in Abhängigkeit von dem in ihr befindlichen Wasser steht. Eine größere Menge von Wasser in der Brennstoffzelle führt somit ebenso wie eine Undichtigkeit in der Membran zu einer Erniedrigung der Zellspannung. Dieser Testfehler wird durch das Entwässern der Brennstoffzelle vor der Messung der Zellspannung vermieden.

In einer weiteren zweckmäßigen Ausgestaltung der Erfindung wird das Verfahren auf eine planare Brennstoffzelle in einem eine Vielzahl von planaren Brennstoffzellen umfassenden Brennstoffzellenblock angewendet. Hierfür werden alle Brennstoffzellen des Brennstoffzellenblocks mit den Testgasen beaufschlagt und die Zellspannung der Brennstoffzellen überwacht. Der Brennstoffzellenblock ist beispielsweise lediglich aus den gestapelten und gegeneinander abgedichteten Brennstoffzellen, einer Front- und Endplatte sowie eventuell einem notwendigen Befeuchter zusammengesetzt, wobei jegliche Versorgungs- und Überwachungseinrichtungen fehlen. Der Block kann manuell und mit einfachen Mitteln mit den Testgasen versorgt und die Zellspannungen überwacht werden. Tritt bei diesem sehr frühen Montagestadium des Brennstoffzellenblocks zu Tage, dass eine Brennstoffzelle fehlerhaft ist, so kann der Brennstoffzellenblock ohne großen Aufwand auseinandergenommen und die fehlerhafte Brennstoffzelle ausgetauscht werden.

Die oben genannte Aufgabe der Erfindung wird auch von einem Verfahren zum Erkennen einer Undichtigkeit in einer Brennstoffzelle gelöst, bei der anstelle der Zellspannung einer einzelnen Brennstoffzelle die Gruppenzellspannung einer Gruppe von in Reihe geschalteten Brennstoffzellen gemessen und ihr zeitlicher Verlauf überwacht wird. Der Brennstoffzellenblock wird hierbei in eine Anzahl von Brennstoffzellengruppen eingeteilt und die Spannung dieser Gruppen wird jeweils überwacht. Liegt die Gruppenzellspannung einer Gruppe unterhalb der normalen Zellspannung multipliziert mit der Anzahl der Brennstoffzellen in der Gruppe, so ist dies ein Hinweis darauf, dass innerhalb der Gruppe eine beschädigte Brennstoffzelle angeordnet ist. Diese Gruppe kann dann in einem zweiten Testschritt näher untersucht werden, indem sie beispielsweise in Untergruppen eingeteilt wird oder indem jede einzelne Zelle dieser Gruppe auf ihre Zellspannung hin untersucht wird. Auf diese Weise wird erreicht, dass bei einem sehr viele Brennstoffzellen umfassenden Brennstoffzellenblock nicht jede Brennstoffzelle einzeln auf ihre Zellspannung hin überwacht werden muss und trotzdem eine fehlerhafte Brennstoffzelle sehr einfach und zuverlässig identifiziert werden kann.

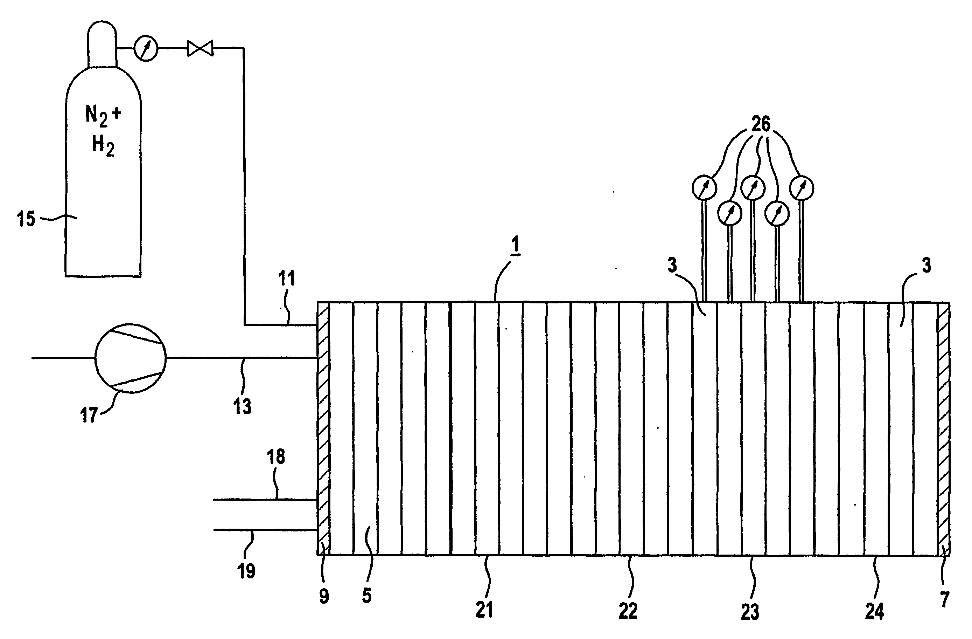

Ein Ausführungsbeispiel der Erfindung wird anhand einer Zeichnung, die eine einzige Figur umfasst, näher erläutert. Figur 1 zeigt einen Brennstoffzellenblock 1, der eine Vielzahl von Brennstoffzellen 3 und einen fünf Zellen umfassenden Befeuchter 5 umfasst. Der Brennstoffzellenblock 1 wird begrenzt durch eine Rückplatte 7 und eine Frontplatte 9, mit der eine erste Leitung 11 zur Versorgung des Brennstoffzellenblocks 1 mit erstem Testgas und eine zweite Leitung 13 zur Versorgung des Brennstoffzellenblocks 1 mit einem zweiten Testgas verbunden ist. Die erste Leitung 11 ist mit einer Gasflasche 15, die das erste Testgas enthält, verbunden. Das erste Testgas enthält 5% Wasserstoff und 95% Stickstoff. Die zweite Leitung 13 ist mit einem Luftverdichter 17 verbunden. An der Frontplatte 9 ist außerdem die Anodenabgasleitung 18 und die Kathodenabgasleitung 19 des Brennstoffzellenblocks 1 angebracht.

Der Brennstoffzellenblock 1 wurde willkürlich in vier Brennstoffzellengruppen, nämlich eine erste Brennstoffzellengruppe 21, eine zweite Brennstoffzellengruppe 22, eine dritte Brennstoffzellengruppe 23 und eine vierte Brennstoffzellengruppe 24 unterteilt. Jede dieser vier Brennstoffzellengruppen 21 bis 24 umfasst jeweils fünf Brennstoffzellen 3. In einem ersten Lecktestverfahren wird dem Brennstoffzellenblock 1 und somit allen Brennstoffzellen 3 das erste Testgas und als zweites Testgas Luft zugeführt, wobei die Gruppenzellspannungen der vier Brennstoffzellengruppen 21 bis 24 gemessen und auf ihren zeitlichen Verlauf hin überwacht werden. Die Brennstoffzellen 3 des Brennstoffzellenblocks 1 werden während der Messung der Zellspannung kontinuierlich mit den beiden Testgasen gespült. Außerdem werden die Kathodengasräume der Brennstoffzellen 3 des Brennstoffzellenblocks 1 mit einem etwa 0,1 bar größeren Druck beaufschlagt als die Anodengasräume der Brennstoffzellen 3 des Brennstoffzellenblocks 1. Die Gruppenzellspannungen der Brennstoffzellengruppen 21, 22, und 24 betrage jeweils 5 V, was etwa der fünffachen normalen Zellspannung einer intakten Brennstoffzelle ohne angeschaltete elektrische Last entspricht. Die Gruppenzellspannung der Brennstoffzellengruppe 23 betrage hingegen nur 4,2 V. Es ist somit erkennbar, dass die Brennstoffzellen 3 der Brennstoffzellengruppen 21, 22 und 24 keine Undichtigkeit in ihren Membranen aufweisen, wohingegen die niedrigere Gruppenzellspannung der Brennstoffzellengruppe 23 ein Indiz dafür ist, dass in der Brennstoffzellengruppe 23 eine defekte Brennstoffzelle angeordnet ist.

In einem zweiten Lecktestverfahren wird die Brennstoffzellengruppe 23 gesondert untersucht, indem jede einzelne ihrer fünf Brennstoffzellen mit einem Zellspannungsmessgerät 26 verbunden wird. Vor der Messung der Zellspannung werden die Kathodengasräume der Brennstoffzellen 3 der Brennstoffzellengruppe 23 entwässert, da sich im Verlauf der ersten Messung in diesen Brennstoffzellen Produktwasser angesammelt hat. Es wird dann der Kathodengasraum der Brennstoffzellen 3 der Brennstoffzellengruppe 23 mit einem ersten Testgas beaufschlagt und ständig durchspült, wohingegen der Anodengasraum der Brennstoffzellen 3 dieser Gruppe evakuiert wird.

Nach der Evakuierung werden die Anodengasräume mit dem zweiten, wasserstoffhaltigen Testgas, dem Anodengas befüllt, wobei jedoch die Anodengasableitung 18 des Brennstoffzellenblocks 1 verschlossen ist. Die Zellspannung der fünf Brennstoffzellen 3 der Brennstoffzellengruppe 23 wird gemessen und auf ihren zeitlichen Verlauf überwacht, wobei sich zeige, dass bei der mittleren der fünf Brennstoffzellen 3 der Brennstoffzellengruppe 23 die Zellspannung nur kurz ansteigt, um nach einer kurzen Weile zusammenzubrechen. Dieses zeitliche Verhalten der Zellspannung ist ein Indiz dafür, dass das erste und wasserstoffhaltige Testgas die Anode der mittleren Brennstoffzelle 3 verzögert und nur kurz und in geringem Maße erreicht. Es ist davon auszugehen, dass die Membran der mittleren Brennstoffzelle 3 der Brennstoffzellengruppe 23 eine Undichtigkeit aufweist.

Bevor der Brennstoffzellenblock 1 zusammen mit Versorgungsund Überwachungseinrichtungen zu einem Brennstoffzellenmodul zusammengebaut wird, ist somit die mittlere Brennstoffzelle 3 der Brennstoffzellengruppe 23 zu ersetzen. Da der Brennstoffzellenblock 1 jedoch noch völlig "nackt" ist, und noch nicht in das Modul integriert wurde, ist das Auswechseln der schadhaften Brennstoffzelle 3 ein relativ unaufwendiges Unterfangen.

## Patentansprüche

1. Verfahren zum Erkennen einer internen Undichtigkeit in einer Brennstoffzelle (3), bei dem der Anodengasraum der Brennstoffzelle (3) mit einem ersten Testgas und der Kathodengasraum der Brennstoffzelle (3) mit einem zweiten Testgas beaufschlagt und die Zellspannung der Brennstoffzelle (3) gemessen und der zeitliche Verlauf der Zellspannung überwacht wird, wobei als erstes Testgas ein Gas mit einem Wasserstoffgehalt von 0,1 bis 20 Vol.-% und als zweites Testgas ein Gas mit einem Sauerstoffgehalt von 0,1 bis 30 Vol.-% gewählt wird.

2. Verfahren zum Erkennen einer internen Undichtigkeit in einer Brennstoffzelle (3) einer Gruppe (21, 22, 23, 24) von in Reihe geschalteten Brennstoffzellen, bei dem der Anodengasraum der Brennstoffzelle (3) mit einem ersten Testgas und der Kathodengasraum der Brennstoffzelle (3) mit einem zweiten Testgas beaufschlagt und eine Gruppenzellspannung der Gruppe (21, 22, 23, 24) von Brennstoffzellen gemessen und ihr zeitlicher Verlauf überwacht wird, wobei als erstes Testgas ein Gas mit einem Wasserstoffgehalt von 0,1 bis 20 Vol.-% und als zweites Testgas ein Gas mit einem Sauerstoffgehalt von 0,1 bis 30 Vol.-% gewählt wird.

3. Verfahren nach Anspruch 1 oder 2,
**dadurch gekennzeichnet, dass** der Wasserstoffgehalt des ersten Testgases addiert mit dem Sauerstoffgehalt des zweiten Testgases nicht mehr als 35 Vol.-% ergibt.

4. Verfahren nach Anspruch 1, 2 oder 3,
**dadurch gekennzeichnet, dass** die Brennstoffzelle (3) während der Messung der Zellspannung kontinuierlich mit den Testgasen gespült wird.

5. Verfahren nach Anspruch 1, 2 oder 3,
**dadurch gekennzeichnet, dass** erst ein Gasraum mit einem der Testgase beaufschlagt und dann der andere Gasraum mit dem anderen Testgas beaufschlagt wird, wobei während der Messung das letztere Testgas in der Brennstoffzelle (3) nicht erneuert wird.

6. Verfahren nach einem der vorhergehenden Ansprüche,
**dadurch gekennzeichnet, dass** während der Messung der Zellspannung einer der Gasräume mit einem größeren Gasdruck mit Testgas beaufschlagt wird als der andere Gasraum.

7. Verfahren nach einem der vorhergehenden Ansprüche,
**dadurch gekennzeichnet, dass** mindestens einer der Gasräume vor der Messung der Zellspannung entwässert wird.

8. Verfahren nach einem der vorhergehenden Ansprüche, angewendet auf eine planare Brennstoffzelle (3) in einem eine Vielzahl von planaren Brennstoffzellen (3) umfassenden Brennstoffzellenblock (1).

## Claims

1. Method for detecting an internal leak in a fuel cell (3), in which the anode gas space of the fuel cell (3) is acted on by a first test gas and the cathode gas space of the fuel cell (3) is acted on by a second test gas, and the cell voltage of the fuel cell (3) is measured and the temporal profile of the cell voltage monitored, the first test gas selected being a gas with a hydrogen content of from 0.1 to 20% by volume and the second test gas selected being a gas with an oxygen content of from 0.1 to 30% by volume.

2. Method for detecting an internal leak in a fuel cell (3) belonging to a group (21, 22, 23, 24) of fuel cells connected in series, in which the anode gas space of the fuel cell (3) is acted on by a first test gas and the cathode gas space of the fuel cell (3) is acted on by a second test gas, and a group cell voltage of the group (21, 22, 23, 24) of fuel cells is measured and its temporal profile monitored, the first test gas selected being a gas with a hydrogen content of from 0.1 to 20% by volume and the second test gas selected being a gas with an oxygen content of from 0.1 to 30% by volume.

3. Method according to Claim 1 or 2, **characterized in that** the hydrogen content of the first test gas added to the oxygen content of the second test gas amounts to no more than 35% by volume.

4. Method according to Claim 1, 2 or 3, **characterized in that** during the measurement of the cell voltage the fuel cell (3) is continuously flushed with the test gases.

5. Method according to Claim 1, 2 or 3, **characterized in that** first of all one gas space is acted on by one of the test gases, and then the other gas space is acted on by the other test gas, the latter test gas not being renewed in the fuel cell (3) during the measurement.

6. Method according to one of the preceding claims, **characterized in that** during the measurement of the cell voltage one of the gas spaces is acted on by a greater test gas pressure than the other gas space.

7. Method according to one of the preceding claims, **characterized in that** the water is drained out of at least one of the gas spaces before the cell voltage is measured.

8. Method according to one of the preceding claims, applied to a planar fuel cell (3) in a fuel cell block (1) which comprises a multiplicity of planar fuel cells (3).

## Revendications

1. Procédé pour reconnaître un défaut d'étanchéité interne dans une pile (3) à combustible, dans lequel on alimente l'espace réservé au gaz à l'anode de la pile (3) à combustible en un premier gaz de test et l'espace réservé au gaz à la cathode de la pile (3) à combustible en un deuxième gaz de test et l'on mesure la tension de pile de la pile (3) à combustible et l'on contrôle la variation dans le temps de la tension de la pile, en choisissant comme premier gaz de test un gaz ayant une teneur en hydrogène de 0,1 à 20 % en volume et comme deuxième gaz de test un gaz ayant une teneur en oxygène de 0,1 à 30 % en volume.

2. Procédé pour reconnaître un défaut d'étanchéité interne dans une pile (3) à combustible d'un groupe (21, 22, 23, 24) de piles à combustible montées en série, dans lequel on alimente l'espace réservé au gaz à l'anode de la pile (3) à combustible en un premier gaz de test et l'espace réservé au gaz à la cathode de la pile (3) à combustible en un deuxième gaz de test et on mesure une tension du groupe (21, 22, 23, 24) de piles à combustible et l'on contrôle sa variation dans le temps, en choisissant comme premier gaz de test un gaz ayant une teneur en hydrogène de 0,1 à 20 % en volume et comme deuxième gaz de test un gaz ayant une teneur en oxygène de 0,1 à 30 % en volume.

3. Procédé suivant la revendication 1 ou 2, **caractérisé en ce que** la teneur en hydrogène du premier gaz de test additionnée de la teneur en oxygène du deuxième gaz de test ne donne pas plus de 35 % en volume.

4. Procédé suivant la revendication 1, 2 ou 3, **caractérisé en ce que** l'on balaie la pile (3) à combustible pendant la mesure de la tension de la pile continuellement par les gaz de test.

5. Procédé suivant la revendication 1, 2 ou 3, **caractérisé en ce qu'**on alimente d'abord un espace réservé au gaz en l'un des gaz de test et ensuite l'autre espace réservé au gaz en l'autre gaz de test, le dernier gaz de test n'étant pas renouvelé dans la pile (3) à combustible pendant la mesure.

6. Procédé suivant l'une des revendications précédentes, **caractérisé en ce que**, pendant la mesure de la tension de la pile, on alimente l'un des espaces réservés au gaz avec une pression plus grande du gaz de test que l'autre espace réservé au gaz.

7. Procédé suivant l'une des revendications précédentes, **caractérisé en ce qu'**au moins l'un des espaces réservés au gaz est déshydraté avant la mesure de la tension de la pile.

8. Procédé suivant l'une des revendications précédentes utilisé sur une pile (3) à combustible plane dans un bloc (1) de piles à combustible comprenant une pluralité de piles (3) à combustible plane.
